# EUROPÄISCHE PATENTSCHRIFT

(11) **EP 1 092 001 B1**
(45) Veröffentlichungstag und Bekanntmachung des Hinweises auf die Patenterteilung: **13.03.2002**
(21) Anmeldenummer: 99931051.9
(22) Anmeldetag: 07.06.1999
(51) Int. Cl.: C09D 5/44

(54) **FESTE HARNSTOFFVERBINDUNGEN ENTHALTENDE WÄSSRIGE ELEKTROTAUCHLACKE**
AQUEOUS ELECTROPHORETIC ENAMELS CONTAINING SOLID UREA COMPOUNDS
PEINTURE AQUEUSE POUR TREMPAGE ELECTROPHORETIQUE CONTENANT DES COMPOSES SOLIDES D'UREE

(30) Priorität: 06.06.1998 DE 19825457
(43) Veröffentlichungstag der Anmeldung: 18.04.2001
(73) Patentinhaber: E.I. Dupont de Nemours and Company, Inc., Wilmington, DE 19898 (US)
(72) Erfinder: FLOSBACH, Carmen, D-42287 Wuppertal (DE); KERBER, Hermann, D-42369 Wuppertal (DE); KERLIN, Klaus-Günter, D-42781 Haan (DE); KLEIN, Klausjörg, D-42289 Wuppertal (DE); VOGT-BIRNBRICH, Bettina, D-42719 Solingen (DE)
(74) Vertreter: Gille Hrabal Struck Neidlein Prop Roos
(86) Internationale Anmeldenummer: EP9903997
(87) Internationale Veröffentlichungsnummer: WO9964525

(56) Entgegenhaltungen:
- EP-A- 0 377 337
- EP-A- 0 433 783
- DE-A- 4 332 014

## Beschreibung

Die Erfindung betrifft wäßrige Elektrotauchlacke (ETL). Die Erfindung betrifft auch Verfahren zur Verhinderung der Kantenflucht beim Einbrennen von elektrophoretisch abgeschiedenen wäßrigen Elektrotauchlacken unter Verwendung der erfindungsgemäßen Elektrotauchlacke.

Elektrotauchlacke werden insbesondere zur Herstellung von korrosionsschützenden Grundierungen auf metallischen Untergründen verwendet. Beispielsweise können sie aber auch auf beliebigen elektrisch leitfähigen Substraten als Einschichtdecklack, Klarlack oder als Lackschicht, die innerhalb einer Mehrschichtlackierung angeordnet ist, abgeschieden und eingebrannt werden. Bei einer innerhalb einer Mehrschichtlackierung angeordneten ETL-Schicht kann es sich beispielsweise um eine Lackschicht mit dekorativer Wirkung handeln, die als Decklack fungiert oder noch mit einer Klarlackschicht überlackiert werden kann.

Ein Problem bei der Lackierung mit Elektrotauchlacken ist die Kantenflucht beim Einbrennen einer zuvor auf einem elektrisch leitfähigen Substrat abgeschiedenen ETL-Schicht. Dabei zieht die ETL-Schicht von der Kante weg unter Verringerung der Schichtdicke an bzw. in unmittelbarer Nähe der Kante. Im Extremfall ist die Kante nach dem Einbrennen unbeschichtet. Während dies beispielsweise im Falle dekorativer ETL-Beschichtungen als Farbunterschied aufgrund des im Bereich der Kante durchscheinenden Untergrundes wahrgenommen wird, kommt es im Falle von korrosionsschützenden ETL-Grundierungen zu einer Beeinträchtigung oder zum Verlust der korrosionsschützenden Wirkung an bzw. im Bereich der Kante.

Aus der EP-A-0 433 783 sind Elektrotauchlacküberzugsmittel mit guter Kantenabdeckung bekannt, die Polymerpulver enthalten. Bei den Polymerpulvern kann es sich beispielsweise auch um pulverförmige Hamstoff-Aldehydharze handeln, die hoch vernetzt sind und keinen Schmelzpunkt aufweisen. Die Herstellung der Polymerpulver und ihre Einarbeitung in Elektrotauchlacküberzugsmittel ist aufwendig und erfordert beispielsweise einen Mahlprozeß.

In der DE-A-43 32 014 werden Elektrotauchlacküberzugsmittel beschrieben, die Polymermikroteilchen enthalten, die durch Reaktion von Polyisocyanaten mit verschiedenen Komponenten, die auch Aminogruppen enthalten können, hergestellt werden. Es können somit Harnstoffgruppierungen entstehen.

Aufgabe der Erfindung ist die Bereitstellung von Elektrotauchlacken mit geringem oder ohne Kantenfluchtverhalten beim Einbrennen der aus ihnen elektrophoretisch abgeschiedenen Überzugsschichten, und die ohne besonderen Aufwand bereitgestellt werden können.

Es hat sich gezeigt, daß diese Aufgabe gelöst werden kann durch den Zusatz fester, fein verteilter Harnstoffverbindungen (A) zu ETL-Überzugsmitteln.

Es ist bisher nur bekannt, Harnstoffverbindungen (A) als Antiablaufmittel in Einbrennlacken auf Lösemittelbasis zu verwenden (beispielsweise DE-C-27 51 761, EP-A-0 192 304 und EP-A-0 198 519). Es war aber keineswegs zu erwarten, daß der Einsatz derartiger Harnstoffverbindungen (A) in wäßrigen ETL-Überzugsmitteln möglich ist und eine die Kantenflucht vermindernde Wirkung hat.

Ein Gegenstand der vorliegenden Erfindung sind daher Elektrotauchlacküberzugsmittel, die neben üblichen filmbildenden, selbst- oder fremdvernetzenden Bindemitteln sowie gegebenenfalls Vernetzern, Pigmenten, Füllstoffen, lacküblichen Additiven und Lösemitteln, 0,1 bis 5 Gew.-% einer oder mehrerer fester, fein verteilter Harnstoffverbindungen (A), bei denen es sich um Additionsprodukte aus aromatischen, araliphatischen, cycloaliphatischen oder aliphatischen Diisocyanaten und/oder davon abgeleiteten Polyisocyanaten und Mono- und/oder Polyaminen mit primären und/oder sekundären Aminogruppen handelt, bezogen auf den Harzfestkörpergehalt der ETL-Überzugsmittel, enthalten.

Einen weiteren Gegenstand der Erfindung bildet ein Verfahren zur Verhinderung der Kantenflucht beim Einbrennen von elektrophoretisch abgeschiedenen wäßrigen Elektrotauchlacken, das dadurch gekennzeichnet ist, daß man das erfindungsgemäße Elektrotauchlacküberzugsmittel verwendet.

Die Harnstoffverbindungen werden bevorzugt in einer Menge von 0,3 bis 3, besonders bevorzugt 0,5 bis 2 Gew.-%, bezogen auf den Harzfestkörper, als Kantenflucht verhindernde Additive zugesetzt.

Bei den erfindungsgemäßen Elektrotauchlacken handelt es sich um wäßrige Überzugsmittel mit einem Festkörper von beispielsweise 10 bis 30 Gew.-%. Es kann sich um anodisch oder kathodisch abscheidbare Elektrotauchlacke handeln. Der Festkörper der erfindungsgemäßen Elektrotauchlacke wird durch den Harzfestkörper, Pigmente, Füllstoffe, weitere lackübliche Additive und den erfindungswesentlichen Anteil an festen, fein verteilten Harnstoffverbindungen (A) gebildet. Der Harzfestkörper der erfindungsgemäßen ETL-Überzugsmittel setzt sich zusammen aus dem oder den Bindemitteln und gegebenenfalls enthaltene(n) Vernetzerharze(n). Gegebenenfalls in den erfindungsgemäßen ETL-Überzugsmitteln enthaltene Anreibeharze (Pastenharze) werden zu den Bindemitteln gezählt. Zumindest ein Teil der Bindemittel trägt ionische und/oder in ionische Gruppen überführbare Substituenten. Die Bindemittel können selbst- oder fremdvernetzend sein, im letzteren Fall tragen sie zur chemischen Vernetzung fähige Gruppen und die erfindungsgemäßen ETL-Überzugsmittel enthalten dann Vemetzer. Auch die Vernetzer können ionische Gruppen aufweisen.

Die erfindungsgemäßen ETL-Überzugsmittel enthalten ionische und/oder in ionische Gruppen überführbare Substituenten aufweisende Bindemittel (ETL-Bindemittel), in der Folge auch als ionische Bindemittel bezeichnet. Zusätzlich können neben diesen aber auch von ionischen bzw. in ionische Gruppen überführbaren Gruppen freie Bindemittel, in der Folge als nicht-ionische Bindemittel bezeichnet, in den erfindungsgemäßen ETL-Überzugsmitteln enthalten sein, beispielsweise in einem Mengenanteil von 0 bis 25 Gew.-%, bezogen auf die 100 Gew.-% ergebende Summe aus ionischen und nicht-ionischen Bindemitteln, jeweils bezogen auf den Bindemittelfestkörper (aus Bindemitteln und Pastenharz, ohne den Vernetzeranteil).

Die ionischen Gruppen oder in ionische Gruppen überführbaren Gruppen der ionischen Bindemittel können anionische oder in anionische Gruppen überführbare Gruppen, z.B. saure Gruppen, wie -COOH, -SO₃H und/oder -PO₃H₂ und die entsprechenden, mit Basen neutralisierten anionischen Gruppen sein. Es kann sich bei den ionischen Gruppen aber auch um kationische oder in kationische Gruppen überführbare, z.B. basische Gruppen, bevorzugt stickstoffhaltige basische Gruppen handeln; diese Gruppen können quaternisiert vorliegen oder sie werden mit einem üblichen Neutralisationsmittel, z.B. einer organischen Monocarbonsäure, wie z.B. Ameisensäure oder Essigsäure in kationische Gruppen überführt. Beispiele sind Amino-, Ammonium-, z.B. quartäre Ammonium-, Phosponium-, und/oder Sulfonium-Gruppen. Vorhandene Aminogruppen können primär, sekundär und/oder tertiär sein. Die in ionische Gruppen überführbaren Gruppen können ganz oder teilweise neutralisiert vorliegen.

Die ionischen Bindemittel tragen zur chemischen Vernetzung fähige, funktionelle Gruppen, insbesondere Hydroxylgruppen, beispielsweise entsprechend einer Hydroxylzahl von 30 bis 300, bevorzugt 50 bis 250 mg KOH/g.

Es kann sich bei den erfindungsgemäßen ETL-Überzugsmitteln um an sich bekannte, anodisch abscheidbare ETL-Überzugsmittel (ATL) handeln. Diese enthalten anodisch abscheidbare Bindemittel, beispielsweise auf Basis von Polyestern, Epoxidharzestern, (Meth)acrylcopolymerharzen, Maleinatölen oder Polybutadienölen mit einem Gewichtsmittel der Molmasse (Mw) von beispielsweise 300 bis 10000 und einer Säurezahl von 35 bis 300 mg KOH/g. Die Bindemittel tragen COOH-, SO₃H-und/oder PO₃H₂-Gruppen. Die Harze können nach Neutralisation von mindestens einem Teil der sauren Gruppen in die Wasserphase überführt werden. Die Bindemittel können selbstvernetzend oder fremdvernetzend sein. Die ATL-Überzugsmittel können daher auch übliche Vernetzer enthalten, z.B. Triazinharze, Vernetzer, die umesterungsfähige Gruppen enthalten oder blockierte Polyisocyanate.

Insbesondere bei als korrosionsschützende Grundierung verwendeten erfindungsgemäßen ETL-Überzugsmitteln handelt es sich bevorzugt um an sich bekannte, kathodisch abscheidbare ETL-Überzugsmittel (KTL). Diese enthalten kathodisch abscheidbare Bindemittel, beispielsweise primäre, sekundäre und/oder tertiäre Aminogruppen enthaltende Harze, deren Aminzahlen z.B. bei 20 bis 250 mg KOH/g liegen. Das Gewichtsmittel der Molmasse (Mw) dieser KTL-Bindemittel liegt bevorzugt bei 300 bis 10000. Die Harze können nach Quaternisierung oder Neutralisation von mindestens einem Teil der basischen Gruppen in die Wasserphase überführt werden. Beispiele für solche KTL-Bindemittel sind Aminoepoxidharze, Aminoepoxidharze mit endständigen Doppelbindungen, Aminoepoxidharze mit primären OH-Gruppen, Aminopolyurethanharze, aminogruppenhaltige Polybutadienharze und/oder modifizierte Epoxidharz-Kohlendioxid-Amin-Umsetzungsprodukte sowie Amino(meth)acrylatharze. Die KTL-Bindemittel können selbstvernetzend sein oder sie werden mit bekannten Vernetzern im Gemisch eingesetzt. Beispiele für solche Vernetzer sind Aminoplastharze, blockierte Polyisocyanate, Vernetzer mit endständigen Doppelbindungen, Polyepoxidverbindungen oder Vernetzer, die umesterungsfähige Gruppen enthalten.

Die ionischen Bindemittel können als ETL-Bindemitteldispersion, die gegebenenfalls nichtionische Bindemittel und/oder Vernetzer enthalten kann, zur Herstellung der erfindungsgemäßen ETL-Überzugsmittel eingesetzt werden. ETL-Bindemitteldispersionen können hergestellt werden durch Synthese von ETL-Bindemitteln in Anwesenheit oder Abwesenheit organischer Lösemittel und Überführung in eine wäßrige Dispersion durch Verdünnen der mit Neutralisationsmittel neutralisierten ETL-Bindemittel mit Wasser. Das oder die ETL-Bindemittel können im Gemisch mit einem oder mehreren geeigneten Vernetzern und/oder einem oder mehreren nichtionischen Bindemitteln vorliegen und gemeinsam mit diesen in die wäßrige Dispersion überführt werden. Organisches Lösemittel kann, sofern vorhanden, vor oder nach Überführung in die wäßrige Dispersion bis zum gewünschten Gehalt entfernt werden, beispielsweise durch Destillation im Vakuum. Die nachträgliche Entfernung von Lösemitteln kann beispielsweise vermieden werden, wenn die gegebenenfalls im Gemisch mit Vernetzern und/oder nicht-ionischen Bindemitteln vorliegenden ETL-Bindemittel im lösemittelarmen oder -freien Zustand, z.B. als lösemittelfreie Schmelze bei Temperaturen von beispielsweise bis zu 140°C mit Neutralisationsmittel neutralisiert und anschließend mit Wasser in die ETL-Bindemitteldispersion überführt werden. Ebenfalls ist es möglich, die Entfernung organischer Lösemittel zu vermeiden, wenn die ETL-Bindemittel als Lösung in einem oder mehreren radikalisch polymerisierbaren, olefinisch ungesättigten Monomeren vorgelegt werden oder die Bindemittelsynthese in einem oder mehreren radikalisch polymerisierbaren Monomeren (z.B. Styrol) als Lösemittel durchgeführt wird, danach durch Neutralisation mit Neutralisationsmittel und Verdünnen mit Wasser in eine wäßrige Dispersion überführt wird und anschließend die radikalisch polymerisierbaren Monomere auspolymerisiert werden.

Sowohl erfindungsgemäße ATL- als auch erfindungsgemäße KTL-Überzugsmittel können wie vorstehend erläutert nichtionische Bindemittel enthalten. Beispiele für nichtionische Bindemittel sind (Meth)acrylcopolymerharze, Polyesterharze, Polyurethanharze. Der Ausdruck (Meth)acryl ist synonym mit Acryl und/oder Methacryl. Bevorzugt weisen die nicht-ionischen Bindemittel funktionelle Gruppen, insbesondere vernetzbare funktionelle Gruppen auf. Besonders bevorzugt handelt es sich dabei um die gleichen vernetzbaren funktionellen Gruppen, wie sie auch jeweils in den ionischen Bindemitteln der erfindungsgemäßen ETL-Überzugsmittel enthalten sind. Bevorzugte Beispiele für solche funktionellen Gruppen sind Hydroxylgruppen. Dementsprechend handelt es sich bei den nicht-ionischen Bindemitteln bevorzugt um Polymerpolyole.

Bei den Polymerpolyolen handelt es sich bevorzugt um aus hydroxyfunktionellen Polyestern, Polyurethanen und/oder (Meth)acrylcopolymeren ausgewählte Polymerpolyole. Die Polymerpolyole besitzen mindestens zwei Hydroxylfunktionen im Molekül, entsprechend einer Hydroxylzahl von beispielsweise 30 bis 350 mg KOH/g. Die Polymerpolyole enthalten neben den Hydroxylgruppen bevorzugt keine weiteren funktionellen Gruppen. Die Polymerpolyole weisen beispielsweise ein Zahlenmittel der Molmasse (Mn) von 500 bis 10000 und eine Hydroxylzahl von 30 bis 350 mg KOH/g auf.

Beispiele für Polymerpolyole sind hydroxyfunktionelle Polyester- oder Polyurethanharze, beispielsweise solche mit einem Zahlenmittel der Molmasse (Mn) von 500 bis 5000, bevorzugt von 1000 bis 3000 und Hydroxylzahlen von 30 bis 350, bevorzugt von 50 bis 280 mg KOH/g oder hydroxyfunktionelle (Meth)acrylcopolymere, beispielsweise solche mit einem Zahlenmittel der Molmasse (Mn) zwischen 1000 und 10000 und Hydroxylzahlen von 30 bis 300, bevorzugt von 50 bis 250 mg KOH/g.

Die erfindungsgemäßen ETL-Überzugsmittel enthalten bezogen auf ihren Harzfestkörper 0,1 bis 5, bevorzugt 0,3 bis 3, besonders bevorzugt 0,5 bis 2 Gew.-% einer oder mehrerer fester, fein verteilter Harnstoffverbindungen (A) als Kantenflucht verhindernde Additive.

Bei den Harnstoffverbindungen (A) handelt es sich um organische Harnstoffverbindungen, nämlich um Additionsprodukte aus aromatischen, araliphatischen, cycloaliphatischen oder aliphatischen Diisocyanaten und/oder davon abgeleiteten Polyisocyanaten (beispielsweise solche vom Isocyanurat-Typ) und Mono-und/oder Polyaminen mit primären und/oder sekundären Aminogruppen. Bei den Additionsprodukten kann es sich um durch die Summenformel definierte niedermolekulare Verbindungen oder oligomere oder polymere Additionsprodukte handeln. Bevorzugte Harnstoffverbindungen (A) sind solche, bei denen Polyisocyanat und Amin in einem stöchiometrischen Verhältnis von 0,7 bis 1,5 primären und/oder sekundären Aminogruppen pro Isocyanatgruppe umgesetzt worden sind, besonders bevorzugt in einem stöchiometrischen Verhältnis von Aminogruppen zu Isocyanatgruppen von 1 : 1. Besonders bevorzugt werden als Harnstoffverbindungen (A) Additionsprodukte aus Diisocyanaten, bevorzugt aus aliphatischen oder cycloaliphatischen Diisocyanaten und primären Aminen, bevorzugt primären Monoaminen eingesetzt. Bevorzugt handelt es sich bei den aliphatischen oder cycloaliphatischen Diisocyanaten um symmetrisch aufgebaute Diisocyanate.

Die in den erfindungsgemäßen ETL-Überzugsmitteln eingesetzten Harnstoffverbindungen (A) werden bevorzugt so ausgewählt, daß es sich um feste, besonders bevorzugt kristalline Stoffe handelt, da diese die höchste Wirksamkeit gegen die Kantenflucht aufweisen. Die festen Harnstoffverbindungen (A) liegen in den erfindungsgemäßen ETL-Überzugsmitteln in fein verteilter Form vor, die Teilchengrößen der (A)-Teilchen liegen bevorzugt bei 0,1 bis 20 µm. Bevorzugt besitzen die festen oder kristallinen Harnstoffverbindungen (A) einen hohen Erstarrungs- oder Schmelzpunkt, beispielsweise unterhalb bis oberhalb der beim Einbrennen der erfindungsgemäßen ETL-Überzugsmittel herrschenden Einbrenntemperaturen, insbesondere beispielsweise zwischen 80 und 250°C. Besonders bevorzugt wird das aus 1 mol 1,6-Hexandiisocyanat und 2 mol Benzylamin gebildete Addukt als Harnstoffverbindung (A) in den erfindungsgemäßen ETL-Überzugsmitteln eingesetzt.

Beispiele für erfindungsgemäß verwendbare Harnstoffverbindungen (A) sind solche, wie sie in DE-C-27 51 761, EP-A-0 192 304 und EP-A-0 198 519, auf die hier ausdrücklich Bezug genommen wird, als Antiablaufmittel in Einbrennlacken auf Lösemittelbasis beschrieben werden.

Die Harnstoffverbindungen (A) können in üblicher Weise hergestellt werden durch Addition von Aminen mit primären und/oder sekundären Aminogruppen an Polyisocyanate. Dabei kann Amin zum Polyisocyanat oder Polyisocyanat zum Amin zugegeben werden, oder die Reaktanden werden simultan zugegeben, bevorzugt ist die Zugabe des Polyisocyanats zum Amin. Die Herstellung erfolgt in Abwesenheit von Wasser beispielsweise bei Temperaturen zwischen 20 und 80°C beispielsweise lösemittelfrei in Substanz, bevorzugt in einem inerten Lösemittel oder besonders bevorzugt in Gegenwart von unter den Reaktionsbedingungen inertem Bindemittel oder Vernetzer, beispielsweise einer inerten Bindemittel- oder Vernetzerlösung. Zweckmäßig ist dabei eine gute Durchmischung des Reaktionssystems, beispielsweise durch kräftiges Rühren, durch Verwendung eines Dissolvers oder durch Durchführung der Additionsreaktion in bzw. unter Verwendung eines Rotor-Stator-Aggregats. Soll die Herstellung entsprechend der besonders bevorzugten Verfahrensweise in Gegenwart von inertem Bindemittel oder Vernetzer erfolgen, so kann dies in Gegenwart eines Teils oder des oder der gesamten im erfindungsgemäßen ETL-Überzugsmittel vorhandenen Bindemittel oder Vernetzer erfolgen. Dabei kann es sich um die vorstehend erläuterten ionischen, gegebenenfalls schon neutralisierten Bindemittel, um nichtionische Bindemittel, Vernetzer oder beliebige Gemische dieser Komponenten handeln. Enthält das erfindungsgemäße ETL-Überzugsmittel beispielsweise mehr als ein Bindemittel bzw. mehr als einen Vernetzer, kann die Herstellung beispielsweise in einem dieser Bindemittel oder in einem dieser Vernetzer erfolgen. Wesentlich ist, daß die Bindemittel oder Vernetzer, welche als Reaktionsmedium für die Herstellung der Harnstoffverbindungen (A) verwendet werden, gegenüber den Reaktanden inert sind, d.h. unter den herrschenden Herstellungsbedingungen bevorzugt weder mit dem Amin noch mit dem Polyisocyanat reagieren oder in ihrer Reaktionsfähigkeit gegenüber diesen Reaktanden so gering sind, daß die Reaktanden praktisch nur miteinander, also vollständig zur gewünschten Harnstoffverbindung (A) reagieren. Bevorzugt wird so gearbeitet, daß die gebildeten Harnstoffverbindungen (A) im Bindemittel bzw. der Bindemittellösung und/oder dem Vernetzer bzw. der Vernetzerlösung als feinverteilter Feststoff ausfallen oder auskristallisieren, beispielsweise während oder nach Beendigung der Additionsreaktion, beispielsweise beim oder nach dem Abkühlen. Solche Dispersionen von als fein verteilter Feststoff, bevorzugt kristalliner Feststoff vorliegenden Harnstoffverbindungen (A) können auch hergestellt werden durch Aufschmelzen und feines Verteilen der Harnstoffverbindungen (A) in der Bindemittel(lösung) und/oder Vernetzer(lösung) und anschliessendes Abkühlen unter den Erstarrungs- oder Schmelzpunkt der Harnstoffverbindungen (A). Diese Verfahrensweise bietet sich beispielsweise an, wenn Bindemittel(lösungen) oder Vernetzer(lösungen) verwendet werden sollen, die nicht inert im vorstehend erläuterten Sinne sind.

Es können beispielsweise auf diese Weise hergestellte nicht-wäßrige Dispersionen fester, fein verteilter Harnstoffverbindungen (A) verwendet werden, bevorzugt als Dispersion in organisch gelöstem Bindemittel und/oder Vernetzer, beispielsweise mit einem (A)-Gehalt von 0,5 bis 10, insbesondere zwischen 1 und 10 Gew.-%, bezogen auf den Bindemittel- bzw. Vernetzer-Feststoffgehalt. Beispiele für organische Lösemittel, die in den nicht-wäßrigen Dispersionen der festen, fein verteilten Harnstoffverbindungen (A) enthalten sein können, sind Glykolether, wie Butylglykol, Butyldiglykol, Dipropylenglykoldimethylether, Ethylenglykoldimethylether; Glykoletherester, wie Ethylglykolacetat, Butylglykolacetat, Butyldiglykolacetat, Methoxypropylacetat; Ester, wie Butylacetat; Ketone, wie Methylethylketon, Methylisobutylketon; Alkohole, wie Propanol, Butanol; aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C) und aliphatische Kohlenwasserstoffe. Die Harnstoffverbindungen (A) können beispielsweise in Form solcher Dispersionen bei der Herstellung der erfindungsgemäßen ETL-Überzugsmittel eingesetzt werden. Wie in der Folge noch näher erläutert, können die Harnstoffverbindungen (A) dabei von vornherein bei der Herstellung der erfindungsgemäßen ETL-Überzugsmittel, oder aber auch nachträglich unmittelbar bei der Verwendung zur Elektrotauchlackierung, zugesetzt werden.

Zusätzlich zu dem oder den Bindemitteln, Wasser sowie dem erfindungswesentlichen Gehalt an Harnstoffverbindungen (A) als Kantenflucht verhindernde Additive und gegebenenfalls vorhandenem Vernetzer können die erfindungsgemäßen ETL-Überzugsmittel Pigmente, Füllstoffe, Lösemittel und/oder lackübliche Additive enthalten.

Beispiele für Pigmente sind die üblichen anorganischen und/oder organischen Buntpigmente und/oder Effektpigmente, wie z.B. Titandioxid, Eisenoxidpigmente, Ruß, Phthalocyaninpigmente, Chinacridonpigmente, Metallpigmente, z.B. aus Titan, Aluminium oder Kupfer, Interferenzpigmente, wie z.B. titandioxidbeschichtetes Aluminium, beschichteter Glimmer, Graphiteffektpigmente, plättchenförmiges Eisenoxid, plättchenförmige Kupferphthalocyaninpigmente. Beispiele für Füllstoffe sind Kaolin, Talkum oder Siliciumdioxid. Die erfindungsgemäßen ETL-Überzugsmittel können auch Korrosionsschutzpigmente enthalten. Beispiele dafür sind Zinkphosphat oder organische Korrosionsinhibitoren. Die Art und Menge der Pigmente richtet sich nach dem Verwendungszweck der erfindungsgemäßen ETL-Überzugsmittel. Sollen klare Überzüge erhalten werden, so werden keine oder nur transparente Pigmente, wie z.B. mikronisiertes Titandioxid oder Siliciumdioxid eingesetzt. Sollen deckende Überzüge erhalten werden, so sind bevorzugt farbgebende Pigmente im ETL-Bad enthalten.

Die Pigmente und/oder Füllstoffe können in einem Teil des Bindemittels dispergiert und dann auf einem geeigneten Aggregat, z.B. einer Perlmühle vermahlen werden, wonach eine Komplettierung durch Vermischen mit dem noch fehlenden Anteil an Bindemittel erfolgt. Aus diesem Material kann dann -sofern nicht schon zuvor geschehen, nach Zusatz von Neutralisationsmittel- durch Verdünnen mit Wasser das ETL-Überzugsmittel bzw. -bad hergestellt werden (Einkomponenten-Verfahrensweise).

Pigmentierte, erfindungsgemäße ETL-Überzugsmittel bzw. -bäder können aber auch durch Vermischen einer ETL-Bindemitteldispersion und einer separat hergestellten Pigmentpaste hergestellt werden (Zweikomponenten-Verfahrensweise). Dazu wird eine ETL-Bindemitteldispersion beispielsweise weiter mit Wasser verdünnt und danach eine wäßrige Pigmentpaste zugefügt. Wäßrige Pigmentpasten werden nach dem Fachmann bekannten Methoden hergestellt, bevorzugt durch Dispergieren der Pigmente und/oder Füllstoffe in für diese Zwecke üblichen Pastenharzen. Solche Pastenharze sind dem Fachmann geläufig. Beispiele für in KTL-Bädern verwendbare Pastenharze sind in der EP-A-0 183 025 und in der EP-A-0 469 497 beschrieben.

Das Pigment plus Füllstoff/Bindemittel plus Vernetzer-Gewichtsverhältnis der erfindungsgemäßen ETL-Überzugsmittel beträgt beispielsweise von 0 : 1 bis 0,8 : 1, bevorzugt beträgt es für pigmentierte Lacke zwischen 0,05 : 1 und 0,4 : 1.

Die erfindungsgemäßen ETL-Überzugsmittel können neben den als Kantenflucht verhindernde Additive in den erfindungsgemäßen ETL-Überzugsmitteln enthaltenen Harnstoffverbindungen (A) gegebenenfalls weitere Additive enthalten, beispielsweise in Mengenanteilen von 0,1 bis 5 Gew.-%, bezogen auf den Harzfestkörper. Dabei handelt es sich insbesondere um solche, wie sie für ETL-Überzugsmittel bekannt sind, beispielsweise Netzmittel, Neutralisationsmittel, Verlaufsmittel, Katalysatoren, Korrosionsinhibitoren, Antischaummittel, Lichtschutzmittel, Antioxidantien, sowie übliche Antikrateradditive. Die Additive können auf beliebige Weise, beispielsweise während der Bindemittelsynthese, während der Herstellung von ETL-Bindemitteldispersionen, über eine Pigmentpaste oder auch separat in die erfindungsgemäßen ETL-Überzugsmittel eingebracht werden.

Die erfindungsgemäßen ETL-Überzugsmittel können auch übliche Lösemittel in den für ETL-Überzugsmittel üblichen Anteilen enthalten. Derartige für ETL-Überzugsmittel übliche Lösemittel sind beispielsweise Glykolether, wie Butylglykol und Ethoxypropanol und Alkohole, wie Butanol. Die Lösemittel können auf verschiedene Weise in die erfindungsgemäßen ETL-Überzugsmittel gelangen, beispielsweise als Bestandteil von Bindemittel- oder Vernetzerlösungen, über eine ETL-Bindemitteldispersion, als Bestandteil einer Pigmentpaste oder auch durch separaten Zusatz. Der Lösemittelgehalt der erfindungsgemäßen ETL-Überzugsmittel beträgt beispielsweise von 0 bis 5 Gew.-%, bezogen auf beschichtungsfähiges ETL-Bad.

Die erfindungsgemäßen ETL-Überzugsmittel können nach den bekannten Verfahren zur Herstellung von ETL-Bädern bereitet werden, d.h. grundsätzlich sowohl mittels der vorstehend beschriebenen Einkomponenten- als auch mittels der Zweikomponenten-Verfahrensweise.

Die Herstellung der erfindungsgemäßen ETL-Überzugsmittel erfolgt bevorzugt so, daß die Harnstoffverbindungen (A) wie vorstehend beschrieben als Dispersion fester, feiner Teilchen in einem Lösemittel oder besonders bevorzugt als Dispersion in flüssigem oder gelöstem Bindemittel und/oder Vernetzer, beispielsweise in einem Teil des flüssigen oder gelösten Bindemittels und/oder Vernetzers, mit den übrigen Bestandteilen des ETL-Überzugsmittels vermischt werden. Beispielsweise wird zunächst mit dem übrigen Bindemittel vermischt, bevor die weiteren Bestandteile hinzugemischt werden. Enthalten die erfindungsgemäßen ETL-Überzugsmittel dabei mehr als ein Bindemittel, so ist es möglich, daß die Harnstoffverbindungen (A) in einem Bindemittel vorliegen, dessen funktionelle, insbesondere vernetzbare funktionelle Gruppen sich von den funktionellen Gruppen des oder der weiteren damit zu vermischenden Bindemittel unterscheiden. Bevorzugt ist es jedoch, daß die funktionellen, insbesondere vernetzbaren funktionellen Gruppen der Bindemittel gleich sind, wenn die erfindungsgemäßen ETL-Überzugsmittel mehr als ein Bindemittel enthalten. Bevorzugte Beispiele für solche gleichen funktionellen Gruppen sind Hydroxylgruppen.

Bei der Herstellung erfindungsgemäßer ETL-Überzugsmittel beispielsweise nach der Einkomponenten-Verfahrensweise kann so gearbeitet werden, daß die Harnstoffverbindungen (A) fein verteilt in Gegenwart der in nicht-wäßriger Phase vorliegenden Bestandteile des ETL-Überzugsmittels vorliegen und gemeinsam mit diesen durch Verdünnen mit Wasser in die wäßrige Phase überführt werden. Beispielsweise können Pigmente und/oder Füllstoffe in einem Teil des Bindemittels und/oder Vernetzers dispergiert und dann auf einem geeigneten Aggregat, z.B. einer Perlmühle vermahlen werden, wonach eine Komplettierung durch Vermischen mit dem noch fehlenden Anteil an feinteilig dispergierten, festen Harnstoffverbindungen (A) enthaltendem Bindemittel und/oder Vernetzer erfolgt. Ein Vermahlen der (A)-Teilchen kann so bevorzugt vermieden werden. Aus diesem Material kann dann - sofern nicht schon zuvor geschehen, nach Zusatz von Neutralisationsmittel- durch Verdünnen mit Wasser das ETL-Überzugsmittel bzw. -bad hergestellt werden.

Bei der Herstellung erfindungsgemäßer ETL-Überzugsmittel beispielsweise nach der Zweikomponenten-Verfahrensweise hingegen kann so gearbeitet werden, daß die festen Harnstoffverbindungen (A) fein verteilt in Gegenwart der in nichtwäßriger Phase vorliegenden ionischen Bindemittel vorliegen und gemeinsam mit diesen - sofern nicht schon zuvor geschehen, nach Zusatz von Neutralisationsmittel - durch Verdünnen mit Wasser in die wäßrige Phase überführt werden. Dabei wird eine die festen, fein verteilten Harnstoffverbindungen (A) enthaltende ETL-Bindemitteldispersion erhalten. Aus einer so erhaltenen ETL-Bindemitteldispersion kann dann durch Vermischen mit einer separaten Pigmentpaste ein pigmentiertes, erfindungsgemäßes ETL-Überzugsmittel bzw. -bad hergestellt werden. Alternativ kann bei Anwendung der Zweikomponenten-Verfahrensweise auch so gearbeitet werden, daß zu einer ETL-Bindemitteldispersion eine wäßrige, (A)-Teilchen enthaltende Pigmentpaste hinzugefügt wird. Letztere kann beispielsweise hergestellt werden durch Vermischen oder Emulgieren von feinteilig dispergierten, festen Harnstoffverbindungen (A) enthaltendem Bindemittel und/oder Vernetzer mit einer zuvor durch Dispergieren von Pigmenten und/oder Füllstoffen in wäßrigem Pastenharz hergestellten Pigmentpaste. Ein Vermahlen der (A)-Teilchen kann bei beiden Alternativen der Zweikomponenten-Verfahrensweise vermieden werden.

Die Harnstoffverbindungen können den erfindungsgemäßen ETL-Überzugsmitteln auch separat zugesetzt werden. Beispielsweise ist es dabei auch möglich, den separaten Zusatz nachträglich, beispielsweise als Korrekturadditiv zu beschichtungsfertigen ETL-Bädern durchzuführen. Die Harnstoffverbindungen werden dazu in eine wasserverdünnbare Form überführt; beispielsweise kann der separate, insbesondere nachträgliche Zusatz als Bestandteil einer wäßrigen, beispielsweise separat hergestellten Pigmentpaste erfolgen, oder die Harnstoffverbindungen (A) können mittels eines wasserverdünnbaren Bindemittels, insbesondere als Bestandteil einer ETL-Bindemitteldispersion oder in einem wäßrigen ETL-Pastenharz oder unter Zuhilfenahme geeigneter Emulgatoren zugegeben werden, beispielsweise nach den im vorstehenden Absatz beschriebenen Prinzipien.

Die erfindungsgemäßen ETL-Überzugsmittel können durch Elektroabscheidung im Rahmen einer Einschicht- oder Mehrschichtlackierung auf verschiedene elektrisch leitfähige oder elektrisch leitfähig gemachte Substrate, insbesondere metallische Substrate aufgebracht und eingebrannt werden. Die erfindungsgemäßen ETL-Überzugsmittel eignen sich insbesondere auf dem Kraftfahrzeugsektor, beispielsweise zur korrosionsschützenden Grundierung von Kraftfahrzeugkarosserien oder Kraftfahrzeugkarosserieteilen. Diese Grundierungen können gegebenenfalls mit weiteren Lackschichten versehen werden. Die erfindungsgemäßen ETL-Überzugsmittel können aber beispielsweise auch als Decklack, Klarlack oder als Lackschicht, die innerhalb einer Mehrschichtlackierung angeordnet ist und dekorative Funktion haben kann, abgeschieden und eingebrannt werden.

Die erfindungsgemäßen ETL-Überzugsmittel zeigen überraschenderweise ein deutlich verringertes Kantenfluchtverhalten bzw. kein Kantenfluchtverhalten beim Einbrennen der aus ihnen abgeschiedenen ETL-Überzugsschichten.

### Beispiel 1 (Herstellung von Wismutlactat)

901 Teile einer 70 gew.-%igen Lösung von Milchsäure in Wasser werden auf 70°C erwärmt. Unter Rühren werden 466 Teile handelsübliches Wismutoxid (Bi₂O₃) portionsweise zugegeben. Nach weiteren 6 Stunden Rühren bei 70°C wird der Ansatz auf 20°C gekühlt und 12 Stunden ohne Rühren belassen. Schließlich wird der Niederschlag abfiltriert, mit wenig Wasser und Ethanol gewaschen und bei 50°C getrocknet.

### Beispiel 2 (Herstellung einer KTL-Dispersion)

a) 832 Teile des Monocarbonats eines Epoxidharzes auf der Basis von Bisphenol A (Handelsprodukt Epikote 828) werden mit 830 Teilen eines handelsüblichen Polycaprolactonpolyols (Handelsprodukt CAPA 205) und 712 Teilen Diglykoldimethylether gemischt und bei 70 bis 140°C mit 0,3 % BF₃-Etherat zur Reaktion gebracht, bis eine Epoxidzahl von 0 erreicht wird. Zu diesem Produkt (Festkörper 70 %, 2 Äquivalente Carbonat) werden bei 40 bis 80°C in Gegenwart von 0,3% Zn-Acetylacetonat als Katalysator 307 Teile eines Umsetzungsproduktes aus 174 Teilen Toluylendiisocyanat (2 Äquivalente NCO) mit 137 Teilen 2-Ethylhexanol mit einem NCO-Gehalt von 12,8 % zugegeben. Es wird bis zu einem NCO-Wert von 0 umgesetzt und dann mit Diglykoldimethylether auf 70 % Festkörper eingestellt.
b) Zu 1759 Teilen eines Biscarbonats eines Epoxidharzes auf der Basis von Bisphenol A (Handelsprodukt Epicote 1001) werden bei 60 bis 80°C 618 Teile eines Umsetzungsproduktes aus 348 Teilen Toluylendiisocyanat (80 % 2,4-Isomeres; 20 % 2,6-Isomeres) mit 274 Teilen 2-Ethylhexanol mit einem Rest-NCO-Gehalt von 12,8 % langsam zugegeben. Die Reaktion wird bis zu einem NCO-Wert von 0 fortgesetzt und dann mit Diglykoldimethylether auf 70 % Festkörper eingestellt.
c) Zu 860 Teilen Bishexamethylentriamin gelöst in 2315 Teilen Methoxypropanol werden bei einer Temperatur von 30°C 622 Teile des Umsetzungsproduktes aus 137 Teilen 2-Ethylhexanol mit 174 Teilen Toluylendiisocyanat zugegeben (NCO-Gehalt 12,8 %) und bis zu einem NCO-Gehalt von 0 umgesetzt. Dann werden 4737 Teile des Umsetzungsproduktes b) und 3246 Teile des Reaktionsproduktes a) (jeweils 70 % in Diglykoldimethylether) zugegeben und bei 60 bis 90°C zur Reaktion gebracht. Bei einer Aminzahl von 32 mg KOH/g wird die Reaktion beendet. Das entstehende Produkt wird im Vakuum auf einen Festkörper von 85 % abdestilliert.
d) Es wird mit 30 mmol Ameisensäure/100 g Harz neutralisiert. Danach wird auf 70°C erhitzt und Wismutlactat unter Rühren portionsweise in einer solchen Menge zugegeben, daß 1 Gew.-% Wismut, bezogen auf Feststoffgehalt im Ansatz vorhanden sind. Anschließend wird noch 6 Stunden bei 60°C gerührt und abgekühlt. Anschließend wird eine in der Lösung eines Acrylatharzes (Monomerengewichtsverhältnis: 2,5 % Acrylsäure, 24 % Hydroxyethylmethacrylat, 43 % Styrol, 30,5 % Ethylhexylmethacrylat; zahlenmittleres Molekulargewicht (Mₙ) = 2500) in einem 8 : 1-Gemisch von Solvesso 100 und n-Butanol hergestellte Suspension eines Diharnstoffderivats (Additionsprodukt von 2 mol Benzylamin an 1 mol Hexamethylendiisocyanat) mit einem Festkörpergehalt von 55 Gew.-% (51 Gew.-% Harzfestkörpergehalt und 4 Gew.-% Gehalt an Diharnstoffderivat) in einer solchen Menge zugesetzt, daß 1 Gew.-% an Diharnstoffderivat, bezogen auf Feststoffgehalt im Ansatz vorhanden sind. Es wird mit deionisiertem Wasser in eine Dispersion mit einem Festkörper von 40 Gew.-% überführt.

### Beispiel 3 (Herstellung einer KTL-Dispersion)

Beispiel 2 wird wiederholt mit dem Unterschied, daß in Verfahrensschritt d) anstelle der suspendiertes Diharnstoffderivat enthaltenden Acrylatharzlösung die gleiche Menge der gleichen, jedoch Diharnstoffderivat-freien Acrylatharzlösung (Harzfestkörpergehalt 51 Gew.-%) zugegeben wird.

### Beispiel 4 (Herstellung einer Pigmentpaste)

Zu 223 Teilen des Pastenharzes nach EP-A-0 469 497 A1 Beispiel 1 (55 %) werden unter einem schnellaufenden Rührwerk 15 Teile Essigsäure (50 %), 30 Teile eines handelsüblichen Netzmittels (50 %) und 350 Teile deionisiertes Wasser gegeben. Dazu werden 12,3 Teile Ruß und 430 Teile Titandioxid gegeben. Mit deionisiertem Wasser wird auf einen Festkörper von 53 Gew.-% eingestellt und auf einer Perlmühle vermahlen. Es entsteht eine stabile Pigmentpaste.

### Beispiel 5a (Herstellung eines KTL-Bades und -Beschichtung, erfindungsgemäß)

Durch Vermischen der KTL-Dispersion aus Beispiel 2, deionisiertem Wasser und Zusatz der Pigmentpaste aus Beispiel 4 unter gutem Rühren wird in üblicher Weise ein KTL-Bad mit einem Festkörpergehalt von 20 Gew.-% und einem Pigment/Bindemittel-Gewichtsverhältnis von 0,5 :1 hergestellt. Aus dem mit Ameisensäure auf einen Säure-Gehalt von 35 Milliäquivalente/100 g Festkörper eingestellten KTL-Bad werden gelochte Bleche aus üblichem phosphatiertem Karosseriestahl in 20 µm Trockenschichtdicke kataphoretisch beschichtet und 30 Minuten bei 180°C eingebrannt. Die so beschichteten Bleche wurden einem 480-stündigen Salzsprühtest nach DIN 53167 unterzogen. Es ergab sich ein Korrosionsangriff von 60 % an den Lochkanten.

### Beispiel 5b (Vergleich)

Beispiel 5a wird wiederholt mit dem Unterschied, daß anstelle der KTL-Dispersion aus Beispiel 2 die KTL-Dispersion aus Beispiel 3 verwendet wird. Der Korrosionsangriff lag bei 80 % an den Lochkanten.

## Patentansprüche

1. Wäßriges Elektrotauchlacküberzugsmittel, enthaltend neben üblichen filmbildenden, selbst- oder fremdvernetzenden Bindemitteln sowie gegebenenfalls Vernetzern, Pigmenten, Füllstoffen, lacküblichen Additiven und Lösemitteln, 0,1 bis 5 Gew.-% einer oder mehrerer fester, fein verteilter Harnstoffverbindungen, bei denen es sich um Additionsprodukte aus aromatischen, araliphatischen, cycloaliphatischen oder aliphatischen Diisocyanaten und/oder davon abgeleiteten Polyisocyanaten und Mono- und/oder Polyaminen mit primären und/oder sekundären Aminogruppen handelt, bezogen auf den Harzfestkörpergehalt des Überzugsmittels.

2. Wäßriges Elektrotauchlacküberzugsmittel nach Anspruch 1, **dadurch gekennzeichnet, daß** die festen Harnstoffverbindungen kristallin sind.

3. Wäßriges Elektrotauchlacküberzugsmittel nach Anspruch 1 oder 2, **dadurch gekennzeichnet, daß** die festen Harnstoffverbindungen Teilchengrößen von 0,1 bis 20 µm aufweisen.

4. Wäßriges Elektrotauchlacküberzugsmittel nach einem der vorhergehenden Ansprüche, **dadurch gekennzeichnet, daß** die festen Harnstoffverbindungen einen Erstarrungs- oder Schmelzpunkt unterhalb bis oberhalb der beim Einbrennen der Elektrotauchlacküberzugsmittel herrschenden Einbrenntemperaturen haben.

5. Verfahren zur Verhinderung der Kantenflucht beim Einbrennen von elektrophoretisch abgeschiedenen wäßrigen Elektrotauchlacken, **dadurch gekennzeichnet, daß** man ein Elektrotauchlacküberzugsmittel gemäß einem der Ansprüche 1 bis 4 verwendet.

6. Verfahren nach Ansprucn 5, **dadurch gekennzeichnet, daß** die feinverteilten Harnstoffverbindungen den Elektrotauchlacküberzugsmitteln in Form von nicht-wäßrigen Dispersionen zugesetzt werden.

7. Verfahren nach Anspruch 5 oder 6, **dadurch gekennzeichnet, daß** es zur Elektrotauchlackierung von Kraftfahrzeugkarossen oder deren Teilen durchgeführt wird.

## Claims

1. Aqueous electrocoating lacquer coating composition containing, apart from conventional film-forming, intrinsically or extrinsically crosslinking binders optionally together with crosslinking agents, pigments, extenders, conventional lacquer additives and solvents, 0.1 to 5 wt.% of one or more solid, finely divided urea compounds which comprise addition products prepared from aromatic, araliphatic, cycloaliphatic or aliphatic diisocyanates and/or polyisocyanates derived therefrom and mono- and/or polyamines with primary and/or secondary amino groups, relative to the solids content of the coating composition.

2. Aqueous electrocoating lacquer coating composition according to claim 1, **characterised in that** the solid urea compounds are crystalline.

3. Aqueous electrocoating lacquer coating composition according to claim 1 or 2, **characterised in that** the solid urea compounds exhibit particle sizes of 0.1 to 20 µm.

4. Aqueous electrocoating lacquer coating composition according to one of the preceding claims, **characterised in that** the solid urea compounds have a solidification or melting point below to above the stoving temperatures prevailing during stoving of the electrocoating lacquer coating compositions.

5. Process for the prevention of edge loss during stoving of electrophoretically deposited aqueous electrocoating lacquers, **characterised in that** an electrocoating lacquer coating composition according to one of claims 1 to 4 is used.

6. Process according to claim 5, **characterised in that** the finely divided urea compounds are added to the electrocoating lacquer coating compositions in the form of non-aqueous dispersions.

7. Process according to claim 5 or 6, **characterised in that** it is performed for electrocoating automotive bodies or parts thereof.

## Revendications

1. Produit de revêtement électrophorétique aqueux, contenant, outre des liants usuels filmogènes, autoréticulables ou réticulables sous l'effet d'une action extérieure, et éventuellement des agents de réticulation, des pigments, des matières de charge, des additifs usuels dans les peintures et des solvants, de 0,1 à 5 % en poids d'un ou plusieurs dérivés solides et finement divisés de l'urée, pour ce qui concerne lesquels il s'agit de produits d'addition obtenus à partir de diisocyanates aromatiques, araliphatiques, cycloaliphatiques ou aliphatiques, et/ou de polyisocyanates qui en dérivent, et de mono- et/ou polyamines comportant des groupes amino primaires et/ou secondaires, les pourcentages étant rapportés à l'extrait sec de résine contenu dans le produit de revêtement.

2. Produit de revêtement électrophorétique aqueux selon la revendication 1, **caractérisé en ce que** les dérivés solides de l'urée sont cristallins.

3. Produit de revêtement électrophorétique aqueux selon la revendication 1 ou 2, **caractérisé en ce que** les dérivés solides de l'urée ont une granulométrie de 0,1 à 20 µm.

4. Produit de revêtement électrophorétique aqueux selon l'une des revendications précédentes, **caractérisé en ce que** les dérivés solides de l'urée ont un point de solidification ou de fusion allant d'un point situé en-dessous à un point situé au-dessus des températures de cuisson qui règnent lors de la cuisson des produits de revêtement électrophorétique.

5. Procédé pour empêcher l'écoulement aux bords lors de la cuisson de peintures électrophorétiques aqueuses déposées par électrophorèse, **caractérisé en ce qu'**on utilise un produit de revêtement électrophorétique selon l'une des revendications 1 à 4.

6. Procédé selon la revendication 5, **caractérisé en ce que** les dérivés finement divisés de l'urée sont ajoutés aux produits de revêtement électrophorétique sous forme de dispersions non-aqueuses.

7. Procédé selon la revendication 5 ou 6, **caractérisé en ce qu'**il est mis en oeuvre pour appliquer par électrophorèse une peinture sur des carrosseries automobiles ou sur des éléments de ces dernières.
